# Europäisches Patentamt

(19) **European Patent Office**

**Office européen des brevets**

(11) Veröffentlichungsnummer: **0 074 556
B1**

(12) **EUROPÄISCHE PATENTSCHRIFT**

(45) Veröffentlichungstag der Patentschrift:
06.11.85

(51) Int. Cl.⁴: **C 01 B 25/238**, C 01 G 11/02

(21) Anmeldenummer: **82107985.2**

(22) Anmeldetag: **31.08.82**

(54) Verfahren zur Gewinnung Cadmium-freier Rohphosphorsäure.

(30) Priorität: **03.09.81 DE 3134847**

(43) Veröffentlichungstag der Anmeldung:
**23.03.83 Patentblatt 83/12**

(45) Bekanntmachung des Hinweises auf die Patenterteilung:
**06.11.85 Patentblatt 85/45**

(84) Benannte Vertragsstaaten:
**BE DE FR IT NL SE**

(56) Entgegenhaltungen:
**EP - A - 0 023 195
DE - A - 2 422 902
DE - B - 2 114 806
DE - B - 2 447 390**

**Chemical Abstracts, vcl. 89, no. 22, 27 November 1978,
Columbus, Ohio, USA, H. SASAKI et al. "Removal of
heavy metals in phosphoric acid", page 109, column 2,
abstract no. 181887a
Gmelins, System Nr. 9, Schwefel, Teil B, Seite 100
P. Pascal, Nouveau Traité de Chimie Minérale, Band V,
S. 372-374**

(73) Patentinhaber: **HOECHST AKTIENGESELLSCHAFT,
Postfach 80 03 20, D-6230 Frankfurt am Main 80 (DE)**

(72) Erfinder: **von Plessen, Helmond, Dr.,
Kugelherrnstrasse 16, D-6240 Königstein/Taunus (DE)**
Erfinder: **Bodenbenner, Kurt, Dr.,
Hermann-Kaiser-Strasse 4, D-6200 Wiesbaden (DE)**
Erfinder: **Baechle, Hans Tuisko, Dr., Am Rech 1,
D-6246 Glashütten/Taunus (DE)**

## Beschreibung

Die vorliegende Erfindung betrifft ein Verfahren zur Gewinnung von Cadmium-freier Rohphosphorsäure aus Rohphosphat, wobei man das Rohphosphat mit Salpetersäure aufschliesst.

Zum Aufschluss von Rohphosphaten (Phosphorit, Apatit) werden vielfach Verfahren angewendet, bei denen durch Einwirkung einer Mineralsäure das schwerlösliche Tricalciumphosphat des Minerals in Phosphorsäure und das Calciumsalz der benutzten Mineralsäure umgewandelt wird. Dieses Calciumsalz muss anschliessend abgetrennt werden, um die rohe Phosphorsäure zu erhalten. Die im Rohphosphat vorhandenen Schwermetall-Ionen wie Blei, Cadmium, Quecksilber und Arsen, verbleiben grossenteils in der Rohphosphorsäure.

Wenn man diese Säure weiterverarbeitet, z.B. auf Düngemittel oder Tierfutter, werden die genannten Schwermetalle bis ins Endprodukt gelangen. Aus gesundheitlichen Gründen ist es jedoch unerwünscht, wenn über Düngemittel oder Tierfutter und pflanzliche oder tierische Nahrung diese Schwermetalle, insbesondere Cadmium, in den menschlichen Organismus gelangen. Man hat sich daher bemüht, Verfahren auszuarbeiten, um die genannten Verunreinigungen aus der Rohphosphorsäure zu entfernen.

So kann man Phosphorsäure aus sauren Aufschlüssen durch Extraktion mit organischen Lösungsmitteln raffinieren oder durch Ionenaustausch oder Absorption reinigen. Diese Verfahren kommen aus wirtschaftlichen Gründen für einen grosstechnischen Einsatz weniger in Frage.

Es ist auch bekannt, dass man aus Rohphosphorsäure, die beim Aufschluss mit Schwefelsäure anfällt (sogenannte Nassphosphorsäure) durch Behandlung mit Schwefelwasserstoff Schwermetalle wie Cadmium als schwerlösliche Sulfide entfernen kann. Dabei muss zunächst die gesamte freie Schwefelsäure neutralisiert oder als unlösliches Sulfat entfernt werden. Ein Atomverhältnis Alkali/Phosphor von ca. 0,05 bis 0,3 ist erforderlich. Erst dann kann die Fällung mit Sulfid durchgeführt werden (EP-A-0 023 195).

Aus einer relativ reinen Phosphorsäure mit einem Gehalt von über 45 Gew.-% $P_2O_5$ lässt sich Cadmiumsulfid auch durch Einpressen von Schwefelwasserstoff unter Druck abscheiden (DE-A-2 422 902).

Gemäss Chemical Abstracts Bd. 89, Referat 18 18 94a (1978) wird Nassphosphorsäure mit einem Gemisch aus einem löslichen Sulfid und Calciumhydroxid behandelt. Dadurch sollen Calciumsulfat und Schwermetallsulfide gleichzeitig ausgefällt werden.

Die genannten Sulfidfällungs-Verfahren haben den Nachteil, dass sie nicht direkt auf Rohphosphorsäure übertragbar sind, die nach dem Odda-Verfahren gewonnen wurde. Bei diesem Verfahren wird das Rohphosphat mit konzentrierter Salpetersäure aufgeschlossen und eine stark salpetersäurehaltige Rohphosphorsäure erhalten. Zur Abtrennung von Calciumnitrat, dessen Löslichkeit stark temperaturabhängig ist, wird abgekühlt und das auskristallisierte Calciumnitrat-Tetrahydrat abgetrennt. Die in der stark sauren Aufschlusslösung vorhandenen Schwermetallionen, z.B. von Blei, Quecksilber und Arsen, insbesondere aber von Cadmium, verbleiben grossenteils in der Lösung, der sogenannten Muttersäure. Diese enthält neben Wasser und verschiedenen Verunreinigungen noch ca. 15 - 20 Gew.-% $P_2O_5$, ca. 30 - 35 Gew.-% $HNO_3$ und ca. 7 - 10 Gew.-% CaO. Die Muttersäure wird üblicherweise stufenweise mit Ammoniak neutralisiert und der entstehende Kristallbrei mit Kaliumsalzen vermischt und zu Düngemitteln granuliert.

Es bestand daher die Aufgabe ein Verfahren zu finden, das es gestattete, mit möglichst geringem technischen Aufwand die Schwermetalle, insbesondere das Cadmium, aus der Muttersäure des Odda-Verfahrens abzutrennen. Dabei musste berücksichtigt werden, dass diese geringe Mengen Fluorid enthält und daher stark korrosiv ist. Ferner ist sie durch Sandanteile verunreinigt, die stark abrasiv wirken. Es kommt hinzu, dass wegen der Gegenwart von gelförmiger Kieselsäure Trennoperationen schwierig durchzuführen sind.

Es wurde nun ein Verfahren zur Gewinnung Cadmium-freier Rohphosphorsäure aus Rohphosphat gefunden, bei dem man das Rohphosphat mit Salpetersäure aufschliesst, man die Hauptmenge des gebildeten Calciumnitrats entfernt, so dass eine Cadmium enthaltende wässrige Rohphosphorsäure mit Gehalten von ca. 30 - 35% $HNO_3$, ca. 15 - 20% $P_2O_5$ und ca. 7 - 10% CaO zurückbleibt, und man der Rohphosphorsäure Ammoniak zusetzt, das dadurch gekennzeichnet ist, dass man diese Rohphosphorsäure mit Ammoniak auf einen pH-Bereich von 0,9 - 1,5 einstellt, man Schwefelwasserstoff zugibt und man den ausfallenden, Cadmiumsulfid enthaltenden Niederschlag von der Rohphosphorsäure abtrennt.

Wenn man die Zugabe von Ammoniak unterlässt oder weniger Ammoniak als gefordert zugibt, so kommt es bei der Zugabe von Schwefelwasserstoff zu einer starken Entwicklung von Stickoxyden bzw. einer unvollständigen Bildung des Cadmiumsulfid enthaltenden Niederschlags. Wenn man mit Ammoniak höhere pH-Werte einstellt, so bildet sich ein schleimiger, sehr schwer filtrierbarer Niederschlag, der in der Hauptsache aus Kieselgel, Phosphat, Calcium-, Magnesium- und Aluminium-Salzen zusammengesetzt ist. Daran scheitert auch der Versuch die Sulfide der Schwermetalle bei höheren pH-Werten auszufällen und abzutrennen.

Bei den erfindungsgemäss auf pH-Werte zwischen 0,9 und 1,5 eingestellten salpetersauren Aufschlusslösungen von Rohphosphat treten vielfach bereits nach wenigen Stunden unerwünschte Fällungen auf. Die Ausfällung und Abtrennung der Schwermetallsulfide sollte daher vorteilhafterweise unverzüglich erfolgen.

Es ist bevorzugt, bei der Zugabe von Ammoniak möglichst wenig Wasser einzuschleppen, damit bei der sich anschliessenden Herstellung von festen Düngemitteln wenig Wasser verdampft werden muss.

Die Ausfällung der Sulfide geschieht vorzugsweise bei pH-Werten von 1,0 - 1,2. Vorhandene Trübe kann vor oder nach der Behandlung mit Ammoniak aus der Muttersäure durch Zentrifugieren oder Filtrieren entfernt werden. Für die anschliessende Sulfidfällung kann Schwefelwasserstoff gasförmig eingeleitet oder durch Zugabe eines löslichen Sulfides wie z.B. Natriumsulfid in Lösung erzeugt werden. Ebenso kann man mit Schwefelverbindungen arbeiten, die im sauren Millieu leicht Schwefelwasserstoff entbinden wie z.B. Phosphorpentasulfid oder Thioacetamid. Es hat sich bewährt, einen Überschuss an Sulfid, insbesondere einen hundert- bis fünftausendfachen molaren Überschuss, vorzugsweise einen fünfhundert- bis zweitausendfachen molaren Überschuss, bezogen auf die Menge der Schwermetall-Ionen, einzusetzen. Die Sulfidfällung kann bei Normaldruck oder unter erhöhtem Druck durchgeführt werden.

Zur Messung der pH-Werte in den konzentriert mineralsauren Lösungen werden Glaselektroden, zweckmässigerweise Einstabmessketten mit dem Bezugsystem Ag/AgCl, Bezugselektrolyt 3m KCl + AgCl oder 3,5m KCl, verwendet. Es können speziell Schwefelwasserstoff-sichere Einstabmessketten verwendet werden, die z.B. mit zwei hintereinander geschalteten, durch Diaphragmen getrennten Elektrolytkammern ausgestattet sind. Die pH-Werte müssen in der konzentrierten Lösung ohne Verdünnung gemessen werden. Zur Abtrennung des Sulfides wird das Reaktionsgemisch, bei Normaldruck oder Überdruck, vorzugsweise zentrifugiert und falls erforderlich anschliessend filtriert. Eine Anreicherung der Schwermetallsulfide aus dem Reaktionsgemisch kann auch durch Flotation erfolgen, z.B. in der Weise, dass als Flotiergas Schwefelwasserstoff oder ein Schwefelwasserstoff enthaltendes Gas verwendet wird. Die von den Schwermetallsulfiden befreite Lösung muss durch Ausblasen, z.B. durch Stickstoff, von Schwefelwasserstoff befreit werden. Falls man bei erhöhtem Druck und/oder erhöhter Temperatur arbeitet, kann dies auch durch Entspannen geschehen.

Die gereinigte Rohphosphorsäure kann anschliessend in bekannter Weise mit Ammoniak neutralisiert und die entstehende Salzlösung zu einem Mehrnährstoffdünger eingedampft werden. Bei Zusatz von Kaliumsalzen vor oder nach dem Eindampfen erhält man dabei einen wertvollen NPK-Dünger.

Als Reaktoren sind für die Teilneutralisation mit Ammoniak bis pH 1,5 und die Umsetzung mit Schwefelwasserstoff oder Sulfiden sowohl Rührkessel als auch Rohrreaktoren verschiedener Konstruktion geeignet. Eine Betriebsweise, bei der die Umsetzung mit Ammoniak und Schwefelwasserstoff bei 80 - 100°C unter Überdruck in einem Rohrreaktor vorgenommen wird und anschliessend noch unter Druck die Sulfide abgetrennt werden, ist vorteilhaft. Bei der nachfolgenden Entspannung werden Schwefelwasserstoff und Wasser verdampft. Nach Kondensation der Brüden wird zurückgewonnener Schwefelwassestoff in den Prozess zurückgeführt.

Die für die Teilneutralisation erforderliche Menge Ammoniak beträgt üblicherweise 4 bis 5 Mol $NH_3$/Mol $P_2O_5$.

Die Erfindung wird durch die folgenden Beispiele näher erläutert.

*Beispiel 1*

Geklärte Muttersäure wurde mit Hilfe von konz. wässriger Ammoniaklösung auf unterschiedliche pH-Werte eingestellt. Jeweils 100 g der erhaltenen Lösungen wurden bei Raumtemperatur mit 0,005 Mol Natriumsulfid, was einem ca. 1000fachen molaren Überschuss bezogen auf den Schwermetallgehalt entspricht, versetzt, 1 Stunde lang gerührt und zentrifugiert. Die von den Niederschlägen befreiten Lösungen wurden mittels Atomabsorption analysiert.

| pH | Mol $Na_2S$ | Restgehalt µg Cd/g Lösung |
|-----|-----|-----|
| 0,3 | 0,005 | 6,0 |
| 0,5 | 0,005 | 3,9 |
| 1,0 | 0,005 | 0,2 |
| 1,3 | 0,005 | <0,1; 0,16 |
| 1,3 | 0 | 3,6 |

*Beispiel 2*

In 500 g geklärte Muttersäure wurde unter Rühren und Zugabe von Entschäumer (Bayer 7800 neu)* Ammoniakgas eingeleitet, bis ein pH-Wert von 1,0 bzw. 1,3 erreicht war. Bei einem pH-Wert von 1,3 betrug der Cd-Gehalt 3,8 ppm. In jeweils 100 g der erhaltenen phosphorsauren Lösungen wurde 10 Minuten lang Schwefelwasserstoff eingeleitet und anschliessend wechselnde Zeiten hindurch zentrifugiert und gegebenfalls filtriert. Die von den Sulfiden getrennte Lösung wurde mit Salpetersäure vermischt, durch Ausblasen mit Stickstoff von Schwefelwasserstoff befreit und mittels Atomabsorption analysiert. Die gefundenen Cd-Gehalte wurden umgerechnet auf die von den Sulfiden getrennte Lösung.

| pH | Dauer des Zentrifugiervorganges | Filtration | Restgehalt Cd |
|-----|-----|-----|-----|
| 1,3 | 30 min | + | 1,2 ppm *) |
| 1,3 | 60 min | — | 1,4 ppm |
| 1,3 | 60 min | + | 0,2 ppm |
| 1,0 | 60 min | — | 3,1 ppm |
| 1,0 | 60 min | + | 0,4 ppm |

*) ppm: Gewichtsteile pro Million

*Beispiel 3*

Geklärte Muttersäure (500 g) wurde mittels 25%iger Ammoniaklösung (161 g) bei Raumtemperatur auf pH 1,3 eingestellt. Von der erhaltenen Lösung wurden jeweils 100 g mit den in der folgenden Tabelle aufgeführten Mengen an Natriumsulfidlösung vermischt und 1 h lang gerührt. Die anschliessend zentrifugierten (1 h) und vom Bodensatz abgetrennten Proben wurden filtriert, angesäuert und mittels Atomabsorption analysiert. Die gefundenen Schwermetall-Gehalte wurden umgerechnet auf die Lösung mit pH 1,3.

* Handelsprodukt auf der Basis von Alkylsulfonsäuren

| Zugabe an Na₂S-Lösung 0,5 m | Restgehalt Cd | Restgehalt Hg |
|---|---|---|
| 10 ml | <0,1 ppm | — |
| 2 ml | 0,5 ppm | 2,3 ppb |
| 0,6 ml | 3,0 ppm | — |
| — | 3,2 ppm | 46 ppb |

*Beispiel 4*

Geklärte Muttersäure (500 g) wurde mittels 25%iger Ammoniaklösung (164 g) bei Raumtemperatur auf pH 1,3 eingestellt. Durch Proben der erhaltenen Lösung (3,2 µg Cd/g Lösung) wurde sowohl bei 60°C als auch bei 78°C 10 Minuten lang H₂S geleitet. Anschliessend wurden die Reaktionsgemische bei den jeweiligen Reaktionstemperaturen filtriert. Die Filtrate wurden angesäuert und der Cd-Gehalt mittels Atomabsorption bestimmt. Er lag unter 0,15 µg Cd/g Lösung.

*Beispiel 5*

In geklärter Muttersäure (443 g) wurden 43,4 g Ammoniak bei 25° - 30°C eingeleitet, so dass ein pH-Wert von 1,1 erreicht wurde. Anschliessend wurde die Lösung auf 70°C erwärmt und 10 Minuten lang mit H₂S behandelt. Proben des Reaktionsgemisches wurden in der nachfolgend genannten Weise von den Schwermetallsulfiden bei 70°C abgetrennt und nach Ansäuerung auf Cd und Hg hin analysiert.

| Abtrennung | Restgehalte im Zentrifugat bzw. Filtrat | |
|---|---|---|
| | Cd | Hg |
| Filtrieren | <0,13 ppm | 13 ppb*) |
| Zentrifugieren (15 min) | <0,11 ppm | <11 ppb |
| Zentrifugieren (15 min) und Filtrieren | <0,13 ppm | <13 ppb |

*) ppb: Gewichtsteile pro Milliarde

**Patentansprüche**

1. Verfahren zur Gewinnung cadmiumfreier Rohphosphorsäure aus Rohphosphat, wobei man das Rohphosphat mit Salpetersäure aufschliesst, man die Hauptmenge des gebildeten Calciumnitrats entfernt, so dass eine Cadmium enthaltende wässrige Rohphosphorsäure mit Gehalten von ca. 30 - 35% HNO₃, 15 - 20% P₂O₅ und 7 - 10% CaO zurückbleibt, und man der Rohphosphorsäure Ammoniak zusetzt, dadurch gekennzeichnet, dass man diese Rohphosphorsäure mit Ammoniak auf pH-Werte von 0,9 - 1,5 einstellt, man Schwefelwasserstoff zugibt und man den ausfallenden Cadmiumsulfid enthaltenden Niederschlag von der Rohphosphorsäure abtrennt.

2. Verfahren nach Anspruch 1, dadurch gekennzeichnet, dass man die Rohphosphorsäure mit Ammoniak auf pH-Werte von 1,0 - 1,2 einstellt.

3. Verfahren nach Anspruch 1, dadurch gekennzeichnet, dass man den Cadmiumsulfid enthaltenden Niederschlag durch Zentrifugieren abtrennt.

**Claims**

1. A process for the preparation of cadmium-free crude phosphoric acid from crude phosphate by digesting the crude phosphate by means of nitric acid, removing the main fraction of the calcium nitrate formed to the effect that an aqueous crude phosphoric acid containing cadmium and having contents of approximately 30 - 35% HNO₃, 15 - 20% P₂O₅ and 7 - 10% CaO remains and by adding ammonia to the crude phosphoric acid which comprises adjusting the pH value of this crude phosphoric acid by means of ammonia to values of 0.9 to 1.5, adding hydrogen sulfide and separating the precipitate containing cadmium sulfide from the crude phosphate.

2. A process according to claim 1, which comprises adjusting the pH value of the crude phosphoric acid by means of ammonia to 1.0 to 1.2.

3. A process according to claim 1, which comprises separating the obtained precipitation of cadmium sulfide by centrifugation.

**Revendications**

1. Procédé de préparation d'acide phosphorique brut sans cadmium à partir de phosphates bruts, selon lequel on attaque le phosphate brut par de l'acide nitrique, on enlève la majeure partie du nitrate de calcium formé de manière qu'il reste un acide phosphorique brut aqueux, contenant du cadmium, présentant des teneurs d'environ 30 à 35% de HNO₃, 15 à 20% de P₂O₅ et 7 à 10% de CaO, et l'on ajoute de l'ammoniac à l'acide phosphorique, brut procédé caractérisé en ce qu'on ajuste par de l'ammoniac le pH de cet acide phosphorique brut à des valeurs comprises entre 0,9 et 1,5, on ajoute de l'hydrogène sulfuré et l'on sépare de l'acide phosphorique brut le précipité contenant le sulfure de cadmium qui s'est séparé par précipitation.

2. Procédé selon la revendication 1, caractérisé en ce qu'on ajuste, par de l'ammoniac, l'acide phosphorique brut à un pH compris entre 1,0 et 1,2.

3. Procédé selon la revendication 1, caractérisé en ce qu'on sépare par centrifugation le précipité contenant le sulfure de cadmium.